Europäisches Patentamt

European Patent Office

Office européen des brevets

(11) Publication number: **0 081 915**
**B1**

(12) **EUROPEAN PATENT SPECIFICATION**

(45) Date of publication of patent specification: **05.03.86**

(51) Int. Cl.⁴: **G 02 B 13/24, G 02 B 21/02**

(21) Application number: **82306083.5**

(22) Date of filing: **16.11.82**

(54) **An objective lens for the reproduction of video discs or the like.**

(30) Priority: **20.11.81 JP 185210/81**

(43) Date of publication of application:
**22.06.83 Bulletin 83/25**

(45) Publication of the grant of the patent:
**05.03.86 Bulletin 86/10**

(84) Designated Contracting States:
**DE FR GB**

(56) References cited:
**FR-A- 728 328**
**US-A-4 029 398**
**US-A-4 258 981**
**US-A-4 270 843**

(73) Proprietor: **KONISHIROKU PHOTO INDUSTRY CO. LTD.**
**No. 26-2, Nishishinjuku 1-chome Shinjuku-ku Tokyo 160 (JP)**

(72) Inventor: **Arai, Norikazu**
**22-8, 3-chome, Iwadominami**
**Komae-shi Tokyo (JP)**

(74) Representative: **Ben-Nathan, Laurence Albert et al**
**c/o MICHAEL BURNSIDE & PARTNERS 2 Serjeants' Inn Fleet Street**
**London EC4Y 1HL (GB)**

Courier Press, Leamington Spa, England.

## Description

The present invention relates to an objective lens for the reproduction of video discs, digital audio discs or the like, and particularly to an objective lens which decreases the deterioration in performance resulting from an error of assembly.

In objective lenses used for reproduction of video discs, digital audio discs or the like, a high contrast up to about 1,000 lines/mm of space frequency is required, and if a semi-conductor laser is used as a light source, it is necessary to control an aberration of an optical axis within a diffraction limit where N.A. is 0.45 to 0.5.

In the case where the objective lens is directly driven to effect tracking, the optical axis of the objective lens is always kept vertical with respect to the track and is moved parallel to the disc surface, and therefore, correction of out-of-axis aberration is in principle rarely necessary.

In order to drive directly the objective lens, the objective lens must be as small and light as possible, and to this end, an objective lens whose focal distance is 4 to 5 mm is desirable. If the working distance is not sufficient, this gives rise to a problem in that the objective lens comes into contact with the disc surface thereby damaging the disc and the objective lens.

It is known to use for such a purpose, an objective lens which comprises a first group of cemented positive lenses consisting of a positive lens and a negative lens arranged in that order from the object side and a second positive meniscus lens with a convex surface directed towards the object (for example, US—A—4270843). However, if the first group of lenses and the second lens are eccentric, the aberration is greatly deteriorated, as a consequence of which it is necessary to center the lenses precisely or to make an adjustment after assembly. In the former case, a machine tool of high precision is required and in the latter case, a number of adjustment operations are required.

The object of the invention is to provide an objective lens suitable for reproducing a video disc or the like which can decrease the deterioration of aberration resulting from eccentricity between the first group of lenses and the second lens and which satisfies the various properties required of an objective lens of this kind.

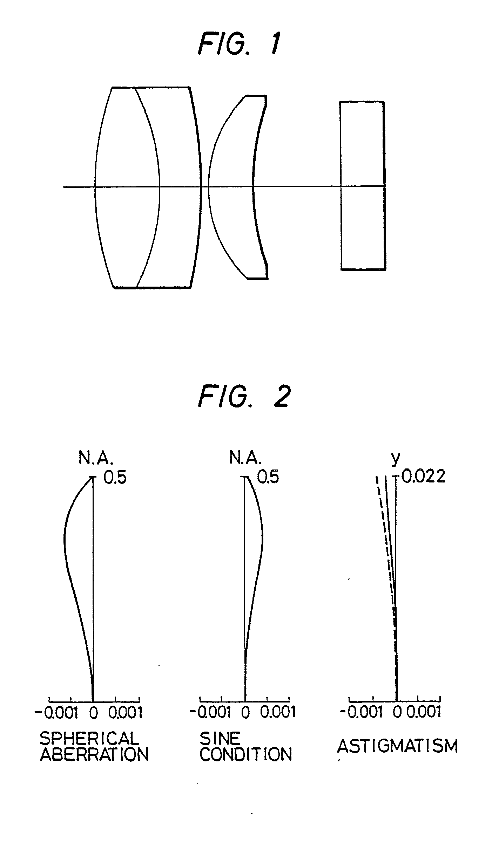

A lens system according to the present invention comprises, as shown in Figure 1, a first group of lenses, which has a cemented positive lens having a positive lens and a negative lens arranged in that order from the object side and a second lens which is constituted by a positive meniscus lens or lens group with a convex surface directed towards the object, characterized in that it satisfies the following conditions:—

$$1.1f < r5 < 1.8f \qquad (1)$$

$$-5.2f < \frac{r2}{n2-n1} < -3.5f \qquad (2)$$

$$0.6f < d1+d4 < 0.72f \qquad (3)$$

where

f: resultant focal length of the overall system
r2: radius of curvature of the cemented surface of the first group of lenses
r5: radius of curvature of the surface on the image side of the second group of lenses
d1: thickness of the first lens
d4: thickness of the second group of lenses
n1: refractive index of the first lens
n2: refractive index of the second lens

The condition (1) is provided to decrease the influence of excentricity caused by the second group of lenses.

If the upper limit is greatly exceeded, the deterioration of aberration resulting from eccentricity increases, resulting in a lens which is not suitable for volume production. This condition is also necessary for correction of the sine condition, and if the upper limit is substantially exceeded, the sine condition is over-corrected. Conversely, if the lower limit is substantially exceeded, this condition is under-corrected.

The condition (2) is concerned with the introduction of a negative lens for correction of spherical aberration. It is advantageous to use a cemented lens as a first group of lenses and arrange a negative lens on the image side in order to prevent deterioration in performance resulting from eccentricity. If the radius of curvature of the cemented surface having a negative function substantially exceeds the upper limit, the spherical aberration is over-corrected, and conversely, if the lower limit is substantially exceeded, the spherical aberration is under-corrected.

The condition (3) is concerned with the spherical aberration and sine condition, and when the upper limit is substantially exceeded, the value of the sine condition increases. Also, the overall length of the lens becomes long and the working distance becomes accordingly short, which is not desirable. Conversely, if the lower limit is substantially exceeded, the value of the sine condition decreases but the residual

2

spherical aberration at the intermediate ring zone increases. In addition, the thickness of the peripheral edge of the lens becomes too small, thereby giving rise to inconvenience in manufacturing the lens.

Also, the refractive index of glass constituting the first group of lenses desirably satisfies the following relationship:

$$n2-n1 \geq 0.2$$

If a difference in the refractive index of both glasses is smaller than the lower limit, $|r2|$ is small resulting in an increase in residual spherical aberration in the intermediate ring zone.

Figure 1 is a sectional view of an example of a lens system in accordance with the present invention;

Figures 2 to 6 show the aberration in a first example to a fifth example, respectively;

Figures 7 and 8 show a typical state of eccentricity; and

Figures 9 and 10 are diagrams showing the relation between the amount of eccentricity and the amount of aberration.

The following are embodiments of objective lens systems in accordance with the present invention.

In these embodiments:

M : Focusing magnification

dc : Thickness of a cover glass on optical axis (The refractive index with respect to 8000 Å wavelength light of the cover glass is 1.51072).

W.D: Working distance

Embodiment 1

f=1.0     N.A.=0.5     M=0

dc=0.2667     W.D.=0.5113

| $r_1$=1.6710 | $d_1$=0.4 | $n_1$=1.51032 | $v_1$=64.1 |
|---|---|---|---|
| $r_2$=−1.1148 | $d_2$=0.2222 | $n_2$=1.78439 | $v_2$=25.4 |
| $r_3$=−2.7925 | $d_3$=0.0222 | | |
| $r_4$=0.7172 | $d_4$=0.2889 | $n_3$=1.78439 | $v_3$=25.4 |
| $r_5$=1.6805 | | | |

$$\frac{r2}{n2-n1}=-4.0675$$

Embodiment 2

f=1.0     N.A.=0.5     M=0

dc=0.2667     W.D.=0.5183

| $r_1$=1.4143 | $d_1$=0.3556 | $n_1$=1.51032 | $v_1$=64.1 |
|---|---|---|---|
| $r_2$=−1.3234 | $d_2$=0.2222 | $n_2$=1.82361 | $v_2$=23.9 |
| $r_3$=−3.0798 | $d_3$=0.0222 | | |
| $r_4$=0.6882 | $d_4$=0.2444 | $n_3$=1.82361 | $v_3$=23.9 |
| $r_5$=1.2774 | | | |

$$\frac{r2}{n2-n1}=-4.2242$$

## Embodiment 3

f=1.0          N.A.=0.5      M=0

dc=0.2667    W.D.=0.5098

| | | | |
|---|---|---|---|
| $r_1=1.7624$ | $d_1=0.4$ | $n_1=1.51032$ | $v_1=64.1$ |
| $r_2=-1.1309$ | $d_2=0.2222$ | $n_2=1.82361$ | $v_2=23.9$ |
| $r_3=-2.7088$ | $d_3=0.0222$ | | |
| $r_4=0.7433$ | $d_4=0.3111$ | $n_3=1.82361$ | $v_3=23.9$ |
| $r_5=1.7443$ | | | |

$$\frac{r2}{n2-n1}=-3.6097$$

## Embodiment 4

f=1.0          N.A.=0.45     M=0

dc=0.2667    W.D.=0.5181

| | | | |
|---|---|---|---|
| $r_1=1.4077$ | $d_1=0.3333$ | $n_1=1.51032$ | $v_1=64.1$ |
| $r_2=-1.1425$ | $d_2=0.2222$ | $n_2=1.73705$ | $v_2=27.5$ |
| $r_3=-3.0298$ | $d_3=0.0222$ | | |
| $r_4=0.6703$ | $d_4=0.2444$ | $n_3=1.73705$ | $v_3=27.5$ |
| $r_5=1.3665$ | | | |

$$\frac{r2}{n2-n1}=-5.0390$$

## Embodiment 5

f=1.0          N.A.=0.47     M=0

dc=0.2665    W.D.=0.5133

| | | | |
|---|---|---|---|
| $r_1=1.7057$ | $d_1=0.3886$ | $n_1=1.51032$ | $v_1=64.1$ |
| $r_2=-1.1243$ | $d_2=0.1777$ | $n_2=1.79236$ | $v_2=40.9$ |
| $r_3=-2.6581$ | $d_3=0.0222$ | | |
| $r_4=0.7066$ | $d_4=0.2887$ | $n_3=1.79236$ | $v_3=40.9$ |
| $r_5=1.5189$ | | | |

$$\frac{r2}{n2-n1}=-3.9864$$

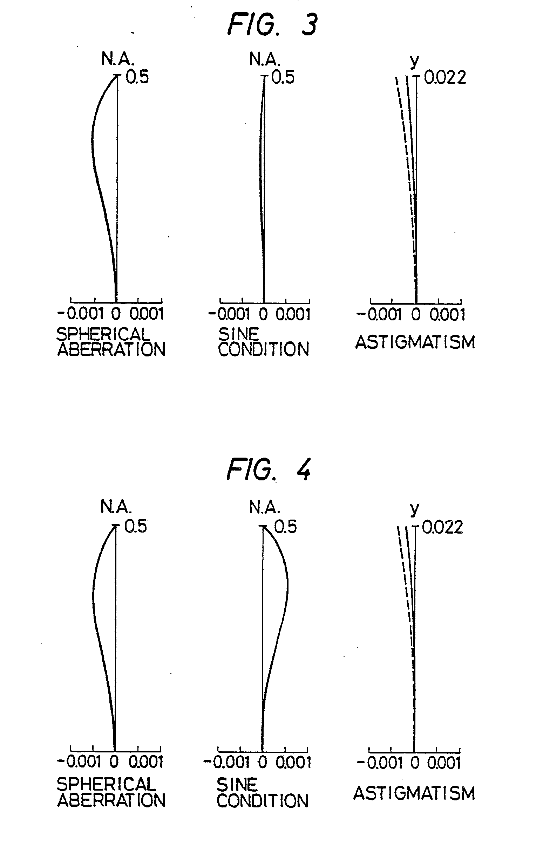

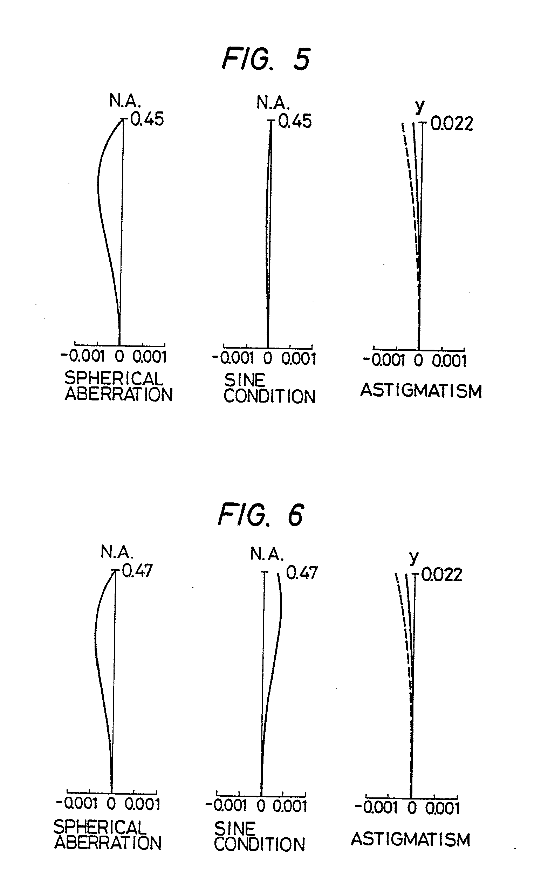

Aberration curves of Embodiments 1 to 5 are shown in Figures 2 to 6.

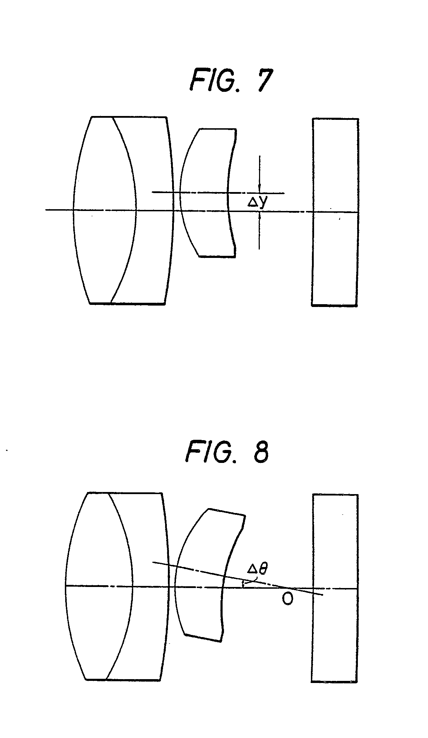

The influence of eccentricity on the objective lens of the present invention as described hereinbefore will be discussed. Figures 7 and 8 show the eccentricity generated in the lens system of the present invention. The optical axis of the first and second groups of lenses is deviated in parallel through $\Delta y$ (Figure 7) or the optical axis of the second group of lenses is inclined with respect to the first group of lenses through $\Delta\theta$ about the center of curvature O on the object side of the second group of lenses (Figure 8). The typical eccentricities in this lens system are the aforesaid two kinds of eccentricities. Thus, the study on these two eccentricities will suffice.

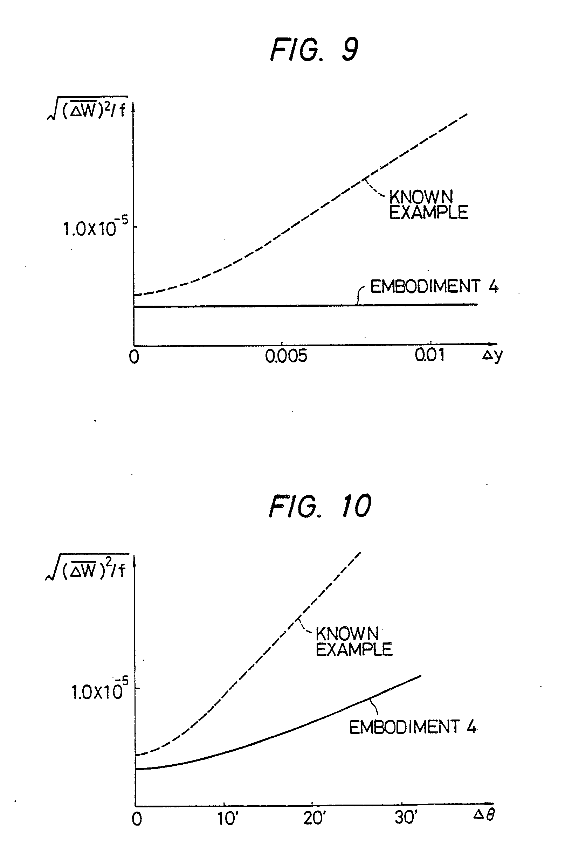

With respect to Embodiment 4 of the objective lens in accordance with the present invention and the following known example as a comparative object, the aberration on the optical axis is represented by the square mean

$$\sqrt{(\overline{\Delta W})^2}$$

of wave-face aberration, and the relation of the eccentric amount therewith is shown in Figures 9 and 10. In the objective lens of the present invention, there occurs little deterioration of aberration resulting from the parallel deviation $\Delta y$, and a deterioration resulting from the inclination $\Delta\theta$ of the optical axis remains at about 1/3 of the example known from US—A—4,270,843, having the following data:

$$f=1.0 \qquad N.A.=0.45 \qquad M=0$$

$$dc=0.2558 \qquad W.D.=0.5581$$

| $r_1=2.605$ | $d_1=0.4070$ | $n_1=1.51462$ | $v_1=64.1$ |
|---|---|---|---|
| $r_2=-0.8514$ | $d_2=0.2581$ | $n_2=1.75607$ | $v_2=26.6$ |
| $r_3=-2.1127$ | $d_3=0.0233$ | | |
| $r_4=0.7804$ | $d_4=0.3256$ | $n_3=1.75607$ | $v_3=26.6$ |
| $r_5=2.8579$ | | | |

$$\frac{r2}{n2-n1}=-3.5259$$

## Claims

1. An objective lens for the reproduction of a video disc, or the like, comprising a first group of lenses, which is a cemented positive lens having a positive lens and a negative lens arranged in that order from the object side and a second lens constituted by a positive meniscus lens or lens group with a convex surface directed towards the object, characterized in that it satisfies the following conditions:

$$1.1f<r5<1.8f \qquad (1)$$

$$-5.2f<\frac{r2}{n2-n1}<-3.5f \qquad (2)$$

$$0.6f<d1+d4<0.72f \qquad (3)$$

where
f: resultant focal length of the overall system
r2: radius of curvature of the cemented surface of the first group of lenses
r5: radius of curvature of the surface of the image side of the second group of lenses
d1: thickness of the first lens of the first group
d4: thickness of the second group of lenses
n1: refractive index of the first lens of the first group
n2: refractive index of the second lens of the first group.

2. An objective lens according to Claim 1 characterized in that

$$n2-n1\geq0.2$$

**0 081 915**

3. An objective lens according to Claim 2, as specified by the following data:

$f=1.0$     N.A.$=0.5$     M$=0$

dc$=0.2667$   W.D.$=0.5113$

| $r_1=1.6710$ | $d_1=0.4$ | $n_1=1.51032$ | $v_1=64.1$ |
|---|---|---|---|
| $r_2=-1.1148$ | $d_2=0.2222$ | $n_2=1.78439$ | $v_2=25.4$ |
| $r_3=-2.7925$ | $d_3=0.0222$ | | |
| $r_4=0.7172$ | $d_4=0.2889$ | $n_3=1.78439$ | $v_3=25.4$ |
| $r_5=1.6805$ | | | |

4. An objective lens according to Claim 2, as specified by the following data:

$f=1.0$     N.A.$=0.5$     M$=0$

dc$=0.2667$   W.D.$=0.5183$

| $r_1=1.4143$ | $d_1=0.3556$ | $n_1=1.51032$ | $v_1=64.1$ |
|---|---|---|---|
| $r_2=-1.3234$ | $d_2=0.2222$ | $n_2=1.82361$ | $v_2=23.9$ |
| $r_3=-3.0798$ | $d_3=0.0222$ | | |
| $r_4=0.6882$ | $d_4=0.2444$ | $n_3=1.82361$ | $v_3=23.9$ |
| $r_5=1.2774$ | | | |

5. An objective lens according to Claim 2, as specified by the following data:

$f=1.0$     N.A.$=0.5$     M$=0$

dc$=0.2667$   W.D.$=0.5098$

| $r_1=1.7624$ | $d_1=0.4$ | $n_1=1.51032$ | $v_1=64.1$ |
|---|---|---|---|
| $r_2=-1.1309$ | $d_2=0.2222$ | $n_2=1.82361$ | $v_2=23.9$ |
| $r_3=-2.7088$ | $d_3=0.0222$ | | |
| $r_4=0.7433$ | $d_4=0.3111$ | $n_3=1.82361$ | $v_3=23.9$ |
| $r_5=1.7443$ | | | |

6

6. An objective lens according to Claim 2, as specified by the following data:

$$f=1.0 \qquad N.A.=0.45 \qquad M=0$$

$$dc=0.2667 \qquad W.D.=0.5181$$

| $r_1=1.4077$ | $d_1=0.3333$ | $n_1=1.51032$ | $v_1=64.1$ |
|---|---|---|---|
| $r_2=-1.1425$ | $d_2=0.2222$ | $n_2=1.73705$ | $v_2=27.5$ |
| $r_3=-3.0298$ | $d_3=0.0222$ | | |
| $r_4=0.6703$ | $d_4=0.2444$ | $n_3=1.73705$ | $v_3=27.5$ |
| $r_5=1.3665$ | | | |

7. An objective lens according to Claim 2, as specified by the following data:

$$f=1.0 \qquad N.A.=0.47 \qquad M=0$$

$$dc=0.2665 \qquad W.D.=0.5133$$

| $r_1=1.7057$ | $d_1=0.3886$ | $n_1=1.51032$ | $v_1=64.1$ |
|---|---|---|---|
| $r_2=-1.1243$ | $d_2=0.1777$ | $n_2=1.79236$ | $v_2=40.9$ |
| $r_3=-2.6581$ | $d_3=0.0222$ | | |
| $r_4=0.7066$ | $d_4=0.2887$ | $n_3=1.79236$ | $v_3=40.9$ |
| $r_5=1.5189$ | | | |

## Patentansprüche

1. Objektivlinse zur Wiedergabe einer Videoplatte oder dergleichen, bestehend aus einer ersten Linsengruppe, die ein verkittetes positives Objektiv mit einer positiven und einer negativen, in dieser Reihenfolge von der Objektseite her angeordneten Linse darstellt, und einer zweiten, eine positive Meniskuslinse oder -linsengruppe darstellenden Linse mit einer dem Objekt zugewandten konvexen Oberfläche, dadurch gekennzeichnet, dass sie folgenden Bedingungen genügt:

$$1.1f<r5<1,8\ f \tag{1}$$

$$-5,2f<\frac{r2}{n2-n1}<-3,5f \tag{2}$$

$$0,6f<d1+d4<0,72f \tag{3}$$

wobei
f: resultierende Brennweite des Gesamtsystems
    r2: Krümmungsradius der Verkittungsfläche der ersten Linsengruppe
    r5: Krümmungsradius der Fläche auf der Bildseite der zweiten Linsengruppe
    d1: Dicke der ersten Linse der ersten Gruppe
    d4: Dicke der zweiten Linsengruppe
    n1: Brechungsindex der ersten Linse der ersten Gruppe
    n2: Brechungsindex der zweiten Linse der ersten Gruppe
bedeuten.

2. Objektivlinse nach Anspruch 1, dadurch gekennzeichnet, dass

$$n2-n1\geq0,2.$$

7

3. Objektivlinse nach Anspruch 2, wie durch die folgenden Zahlenwerte definiert:

f=1,0          N.A.=0,5          M=0
               (Numerische Apertur)          (Fokussiervergrösserung)

dc=0,2667          W.D.=0,5113
(Deckglasdicke)          (Arbeitsabstand)

| | | | |
|---|---|---|---|
| $r_1=1.6710$ | $d_1=0.4$ | $n_1=1.51032$ | $v_1=64.1$ |
| $r_2=-1.1148$ | $d_2=0.2222$ | $n_2=1.78439$ | $v_2=25.4$ |
| $r_3=-2.7925$ | $d_3=0.0222$ | | |
| $r_4=0.7172$ | $d_4=0.2889$ | $n_3=1.78439$ | $v_3=25.4$ |
| $r_5=1.6805$ | | | |

4. Objektivlinse nach Anspruch 2, wie durch die folgenden Zahlenwerte definiert:

f=1,0          N.A.=0,5          M=0

dc=0,2667          W.D.=0,5183

| | | | |
|---|---|---|---|
| $r_1=1.4143$ | $d_1=0.3556$ | $n_1=1.51032$ | $v_1=64.1$ |
| $r_2=-1.3234$ | $d_2=0.2222$ | $n_2=1.82361$ | $v_2=23.9$ |
| $r_3=-3.0798$ | $d_3=0.0222$ | | |
| $r_4=0.6882$ | $d_4=0.2444$ | $n_3=1.82361$ | $v_3=23.9$ |
| $r_5=1.2774$ | | | |

5. Objektivlinse nach Anspruch 2, wie durch die folgenden Zahlenwerte definiert:

f=1,0          N.A.=0,5          M=0

dc=0,2667          W.D.=0,5098

| | | | |
|---|---|---|---|
| $r_1=1.7624$ | $d_1=0.4$ | $n_1=1.51032$ | $v_1=64.1$ |
| $r_2=-1.1309$ | $d_2=0.2222$ | $n_2=1.82361$ | $v_2=23.9$ |
| $r_3=-2.7088$ | $d_3=0.0222$ | | |
| $r_4=0.7433$ | $d_4=0.3111$ | $n_3=1.82361$ | $v_3=23.9$ |
| $r_5=1.7443$ | | | |

6. Objektivlinse nach Anspruch 2, wie durch die folgenden Zahlenwerte definiert:

$$f=1,0 \qquad N.A.=0,45 \qquad M=0$$

$$dc=0,2667 \qquad W.D.=0,5181$$

| | | | |
|---|---|---|---|
| $r_1=1.4077$ | $d_1=0.3333$ | $n_1=1.51032$ | $v_1=64.1$ |
| $r_2=-1.1425$ | $d_2=0.2222$ | $n_2=1.73705$ | $v_2=27.5$ |
| $r_3=-3.0298$ | $d_3=0.0222$ | | |
| $r_4=0.6703$ | $d_4=0.2444$ | $n_3=1.73705$ | $v_3=27.5$ |
| $r_5=1.3665$ | | | |

7. Objektivlinse nach Anspruch 2, wie durch die folgenden Zahlenwerte definiert:

$$f=1,0 \qquad N.A.=0,47 \qquad M=0$$

$$dc=0,2665 \qquad W.D.=0,5133$$

| | | | |
|---|---|---|---|
| $r_1=1.7057$ | $d_1=0.3886$ | $n_1=1.51032$ | $v_1=64.1$ |
| $r_2=-1.1243$ | $d_2=0.1777$ | $n_2=1.79236$ | $v_2=40.9$ |
| $r_3=-2.6581$ | $d_3=0.0222$ | | |
| $r_4=0.7066$ | $d_4=0.2887$ | $n_3=1.79236$ | $v_3=40.9$ |
| $r_5=1.5189$ | | | |

## Revendications

1. Objectif pour la lecture d'un vidéodisque ou d'un dispositif similaire, comprenant un premier groupe de lentilles, qui est une lentille positive collée comportant une lentille positive et une lentille négative disposées dans cet ordre à partir du côté objet et une deuxième lentille constituée par une lentille positive en forme de ménisque ou un groupe de lentilles dont une surface convexe est dirigée vers l'objet, caractérisé en ce qu'il satisfait les conditions suivantes:

$$1,1f < r5 < 1,8f \tag{1}$$

$$-5,2f < \frac{r2}{n2-n1} < -3,5f \tag{2}$$

$$0,6f < d1+d4 < 0,72f \tag{3}$$

où
f: distance focale résultante de l'ensemble du système,
r2: rayon de courbure de la surface collée du premier groupe de lentilles,
r5: rayon de courbure de surface du côté image du second groupe de lentilles,
d1: épaisseur de la première lentille du premier groupe,
d4: épaisseur du second groupe de lentilles,
n1: indice de réfraction de la première lentille du premiere groupe,
n2: indice de réfraction de la deuxième lentille du premier groupe.
2. Objectif selon la revendication, caractérisé en ce que

$$n2-n1 \geqq 0,2.$$

3. Objectif selon la revendication 2, caractérisé en ce qu'il est spécifié par les données suivantes:

$$f=1,0 \qquad N.A.=0,5 \qquad M=0$$

$$dc=0,2667 \qquad W.D.=0,5113$$

| | | | |
|---|---|---|---|
| $r_1=1,6710$ | $d_1=0,4$ | $n_1=1,51032$ | $v_1=64,1$ |
| $r_2=-1,1148$ | $d_2=0,2222$ | $n_2=1,78439$ | $v_2=25,4$ |
| $r_3=-2,7925$ | $d_3=0,0222$ | | |
| $r_4=0,7172$ | $d_4=0,2889$ | $n_3=1,78439$ | $v_3=25,4$ |
| $r_5=1,6805$ | | | |

4. Objectif selon la revendication 2, caractérisé en ce qu'il est spécifié par les données suivantes:

$$f=1,0 \qquad N.A.=0,5 \qquad M=0$$

$$dc=0,2667 \qquad W.D.=0,5183$$

| | | | |
|---|---|---|---|
| $r_1=1,4143$ | $d_1=0,3556$ | $n_1=1,51032$ | $v_1=64,1$ |
| $r_2=-1,3234$ | $d_2=0,2222$ | $n_2=1,82361$ | $v_2=23,9$ |
| $r_3=-3,0798$ | $d_3=0,0222$ | | |
| $r_4=0,6882$ | $d_4=0,2444$ | $n_3=1,82361$ | $v_3=23,9$ |
| $r_5=1,2774$ | | | |

5. Objectif selon la revendication 2, caractérisé en ce qu'il est spécifié par les données suivantes:

$$f=1,0 \qquad N.A.=0,5 \qquad M=0$$

$$dc=0,2667 \qquad W.D.=0,5098$$

| | | | |
|---|---|---|---|
| $r_1=1,7624$ | $d_1=0,4$ | $n_1=1,51032$ | $v_1=64,1$ |
| $r_2=-1,1309$ | $d_2=0,2222$ | $n_2=1,82361$ | $v_2=23,9$ |
| $r_3=-2,7088$ | $d_3=0,0222$ | | |
| $r_4=0,7433$ | $d_4=0,3111$ | $n_3=1,82361$ | $v_3=23,9$ |
| $r_5=1,7443$ | | | |

6. Objectif selon la revendication 2, caractérisé en ce qu'il est spécifié par les données suivantes:

$$f=1,0 \qquad N.A.=0,45 \qquad M=0$$

$$dc=0,2667 \qquad W.D.=0,5181$$

| $r_1=1,4077$ | $d_1=0,3333$ | $n_1=1,51032$ | $v_1=64,1$ |
|---|---|---|---|
| $r_2=-1,1425$ | $d_2=0,2222$ | $n_2=1,73705$ | $v_2=27,5$ |
| $r_3=-3,0298$ | $d_3=0,0222$ | | |
| $r_4=0,6703$ | $d_4=0,2444$ | $n_3=1,73705$ | $v_3=27,5$ |
| $r_5=1,3665$ | | | |

7. Objectif selon la revendication 2, caractérisé en ce qu'il est spécifié par les données suivantes:

$$f=1,0 \qquad N.A.=0,47 \qquad M=0$$

$$dc=0,2665 \qquad W.D.=0,5133$$

| $r_1=1,7057$ | $d_1=0,3886$ | $n_1=1,51032$ | $v_1=64,1$ |
|---|---|---|---|
| $r_2=-1,1243$ | $d_2=0,1777$ | $n_2=1,79236$ | $v_2=40,9$ |
| $r_3=-2,6581$ | $d_3=0,0222$ | | |
| $r_4=0,7066$ | $d_4=0,2887$ | $n_3=1,79236$ | $v_3=40,9$ |
| $r_5=1,5189$ | | | |

## FIG. 1

## FIG. 2

SPHERICAL
ABERRATION

SINE
CONDITION

ASTIGMATISM

# FIG. 3

N.A.
0.5

N.A.
0.5

y
0.022

-0.001 0 0.001
SPHERICAL
ABERRATION

-0.001 0 0.001
SINE
CONDITION

-0.001 0 0.001
ASTIGMATISM

# FIG. 4

N.A.
0.5

N.A.
0.5

y
0.022

-0.001 0 0.001
SPHERICAL
ABERRATION

-0.001 0 0.001
SINE
CONDITION

-0.001 0 0.001
ASTIGMATISM

## FIG. 5

N.A.
0.45

N.A.
0.45

y
0.022

-0.001 0 0.001
SPHERICAL
ABERRATION

-0.001 0 0.001
SINE
CONDITION

-0.001 0 0.001
ASTIGMATISM

## FIG. 6

N.A.
0.47

N.A.
0.47

y
0.022

-0.001 0 0.001
SPHERICAL
ABERRATION

-0.001 0 0.001
SINE
CONDITION

-0.001 0 0.001
ASTIGMATISM

## FIG. 7

## FIG. 8

## FIG. 9

## FIG. 10